# EUROPEAN PATENT APPLICATION

(11) **EP 4 227 106 A1**
(43) Date of publication of application: **16.08.2023**
(21) Application number: 23155805.7
(22) Date of filing: 09.02.2023
(51) Int. Cl.: B41J 3/407, C09D 11/30

(54) **PRINTING METHOD AND APPARATUS FOR THE AESTHETIC, TACTILE OR FUNCTIONAL DECORATION OF FABRICS AND HIDES**

(30) Priority: 11.02.2022 IT 202200002504
(71) Applicant: Eptainks Digital S.r.l., 21057 Olgiate Olona VA (IT)
(72) Inventor: COLOMBO, Annalisa, 20015 PARABIAGO MI (IT); REJNA, Filippo, 22016 TREMEZZINA CO (IT); PRIMI, Germano, 20025 LEGNANO MI (IT); LAOUILY, Mounir, 22100 COMO (IT)
(74) Representative: Modiano, Micaela Nadia

(57) **Abstract**

A printing method for the aesthetic, tactile or functional decoration of fabrics and hides, which comprises a digital printing process in which droplets of at least one coloring and/or functionalizing fluid (5) are dispensed onto a fabric or hide (6) by a digitally-controlled drop-on-demand print head (20), and wherein the fluid (5) has a viscosity at 25°C comprised between 100 and 3500 cP and a static tension comprised between 20 and 75 mN/m.

## Description

The present invention relates to a printing method and a printing apparatus for the aesthetic, tactile or functional decoration of fabrics and hides.

Digital printing systems are known, using digitally-controlled printing heads, for the decoration of fabrics or hides.

Digitally-controlled printing processes that use printing heads can be basically divided into two macro-categories based on the type of heads adopted: Continuous Ink Jet (CIJ) and Drop on Demand (DOD).

In CIJ print heads, ink droplets are constantly ejected and are directed onto a print medium or into a recirculation unit depending on their electrical polarization, by means of a deflection unit. The quantity of ink deposited is variable depending on the wavelength of the pulse.

In DOD print heads, the droplet is ejected on demand, i.e. when a pulse, electric or mechanical, frees a droplet in order to be deposited on the print medium. Various types of DOD print heads exist, with technical characteristics encompassing the pulse transmitted, the droplet formation systems, the modulation of the droplet with a waveform, and the nozzles used.

DOD print heads are the most widespread for printing on fabrics and hides.

Although useful and practical, the above mentioned conventional systems do not make it possible to obtain decorative, tactile or functional effects.

In fact, the decoration of fabrics and hides to obtain decorative, tactile or functional effects entails the use of inks with chemical/physical characteristics such as viscosity, solid particle content, and particle size which are such that they cannot be used with digital printing systems known in the state of the art.

In fact, the print heads that are currently available for digitally printing on fabrics and hides nowadays allow the use of inks that vary in viscosity from 2 to 40 cP at 25°C and in which the maximum dimension of the solid particles contained in the ink is less than 1 µm. The quantity of ink deposited for each single pass is comprised on average between 1.5 and 45 picoliters, according to the viscosity of the ink and the type of head used.

Such a low viscosity and volume substantially allow only the coloring of the print medium, without the possibility of decorating fabrics or hides with further effects of a chromatic, tactile or functional nature. Examples of inks that make it possible to obtain the above mentioned effects, which cannot be printed with conventional digital printing systems, are the following: conductive, magnetic, IR-absorbent, etc. inks, which have a functional role; inks comprising birefringent colors, gilded inks, metalized inks etc., which provide decorations of an aesthetic character; inks comprising flock, rhinestones, glitter, caviar beads etc. also have the characteristic of being tactile, in addition to being decorative.

Nowadays, these effects can be applied to fabrics or hides both via direct printing and via transfer technology, i.e. by way of printing a thermoplastic adhesive on which the effects are then deposited at a later time; in this case, the adhesion between the two parts occurs via the association of heat and pressure.

At any rate, nowadays both direct printing of the above mentioned decorations and adhesive printing combined with transfer technology, cannot be done digitally, i.e. via the digital management of printing ink directly or of printing the adhesive on which the above mentioned effects will be deposited.

In particular, this happens either because the dimensions of the particles are too large (generally larger than 5 µm), as in the first case, or because the viscosity is too high, and cannot be delivered by normal inkjet print heads, as in the case of adhesive.

And so, in the state of the art, when the particle size distribution of the effects allow it, the ink is applied using traditional print methods, generally by screen printing.

In the other case, in order to allow the application of the mentioned effects on fabric or hides, a thermoplastic adhesive is selectively applied using one of the traditional printing processes, usually screen printing, in order to deposit large quantities of material with adhesive properties and, subsequently, apply the decorative or functional effects ("transfer" technology).

Usually, inks with decorative, tactile or functional aesthetic properties used in screen printing have a viscosity much higher than 5,000 cP at 25°C; and inks with adhesive properties used for screen printing combined with the transfer process have a viscosity of at least 1000 cP at 25°C.

Disadvantageously, the preparation and provision of plants for traditional printing, both flat and cylindrical, entails high costs, considerable consumption of energy and materials, and lead times for providing such plants that are not always compatible with current required production speeds.

For example, for flat screen printing, the method requires the preparation of a file which is digitally printed on a transparent black film, called a "transparency".

This transparency allows the image to be printed to be transferred to a "screen". The "screen" is obtained by physically gluing a polyester fabric on a frame. The fabric is then treated with a photographically-sensitive material called "photo-emulsion", i.e. a material that modifies its solubility in an aqueous solution once irradiated by an UV lamp.

The "transparency" makes it possible to separate the areas that will be exposed to light from the areas that will remain in darkness, so as to allow the hardening of the exposed part.

During the step known as "development" the non-reticulated photo-emulsion is selectively removed by washing. This production method of the print screen must be replicated for each color and each effect that it is desired to print, because the film is dedicated.

The example just described shows well how this method makes sense only if there are many pieces to be decorated repetitively, and it does not make sense to use it for customized products.

Furthermore, the need is felt to improve industrial processes to favor better environmental sustainability.

The aim of the present invention is to provide a printing method for the aesthetic, tactile or functional decoration of fabrics and hides that is capable of solving the above mentioned problems and overcoming the above mentioned limitations of the background art.

Within this aim, an object of the present invention is to make available a printing method for the aesthetic, tactile or functional decoration of fabrics and hides that meets the demand for innovative and customized products more efficiently and effectively, by being more versatile and/or efficient with respect to the known art.

Another object of the invention consists of providing a printing method for the aesthetic, tactile or functional decoration of fabrics and hides that reduces waste materials and/or energy consumption.

Another object of the invention consists of providing a printing method for the aesthetic, tactile or functional decoration of fabrics and hides that is easy and rapid to provide and at low cost.

This aim and these and other objects which will become better apparent hereinafter are all achieved by a method according to claim 1.

This aim and these and other objects which will become better apparent hereinafter are also achieved by an apparatus according to claim 9 or 10.

Further characteristics and advantages of the invention will become better apparent from the description of some preferred, but not exclusive, embodiments of a printing method for the aesthetic, tactile or functional decoration of fabrics and hides, and of an apparatus for providing such method, which are illustrated by way of non-limiting example with the aid of the accompanying figure which is a schematic diagram of a generic apparatus for carrying out the method according to the invention.

With reference to the figure, the printing method for the aesthetic, tactile or functional decoration of fabrics and hides, according to the invention, is a digital printing method that comprises a digital printing process in which droplets of at least one coloring and/or functionalizing fluid 5 (for example an ink or an adhesive) are dispensed onto a fabric or hide 6 by a digitally-controlled drop-on-demand print head 20.

In the present description and in the accompanying claims, the term "drop-on-demand print head" means a print head for digital printing of the type commonly known as drop-on-demand (DOD).

According to the invention, the coloring and/or functionalizing fluid 5 used has a viscosity at 25°C comprised between 100 and 3500 cP, chosen on the basis of the specific print head used and according to whether it is an ink for direct printing or an adhesive for transfer technology.

According to the invention, the coloring and/or functionalizing fluid 5 used has a static tension comprised between 20 and 75 Mn/m, preferably comprised between 30 and 45 Mn/m, so as to enable a correct management of the waveform and favor correct printability.

Conveniently, for an optimal provision of the method, the particle size distribution of the fluid 5 used is less than 50 µm, preferably less than 25 µm, measured using a grindometer (if greater than 5 micrometers) or a Mastersizer 2000 (if in the order of one micrometer).

Advantageously, the coloring and/or functionalizing fluid 5 used can be a functionalizing ink, and more precisely an ink with aesthetic, tactile or functional decorative properties, i.e. an ink that provides effects that go beyond mere coloring, like the inks described previously in relation to the known art, which can include: conductive, magnetic, IR-absorbent inks, which have a functional role; inks comprising birefringent colors, gilded inks, metalized inks; inks comprising flock, rhinestones, glitter, caviar beads etc. also have the characteristic of being tactile, in addition to being decorative; adhesives.

Some non-limiting examples of functionalizing ink used in preferred embodiments of the method are:
an ink with adhesive properties comprising a polyurethane aqueous emulsion (a detailed example of this type of ink is described below in the first embodiment of or way of carrying out the method);
an ink with corrosive properties towards cellulose and synthetic fibers (a detailed example of this type of ink is described below in the second embodiment of the method);
an electrically-conducting ink, comprising graphene, that makes it possible to print conductive circuits on fabric (a detailed example of this type of ink is described below in the third embodiment of the method).

With regard to the DOD (drop-on-demand) print head, this is digitally controlled by a programmable electronic unit 30 that comprises, for example, a computer or other conventional electronic control system which will not be discussed further here insofar as its implementation is known to the person skilled in the art.

Among DOD print heads, the Applicant has selected two alternative types of print heads 5 which are optimal for carrying out the method according to the invention:
- a valve-jet (VJ) or electromechanical print head, and
- a piezoelectric head, more precisely a piezoelectric head for additive manufacturing (AM).

The electromechanical, or valve-jet, head comprises in a known manner an electronically-controlled piston configured to modulate the flow rate of ink that is dispensed. In more detail, the electromagnetic valve-jet head conveys a fluid 5 under pressure which, using the electronically-controlled piston that modulates its flow rate, reproduces a pattern which was prepared earlier on the programmable electronic unit 30.

It is important to note here that electromagnetic valve-jet print heads, in the known art outside of the invention, are normally used for marking media of various forms and kinds, and is used with inks of viscosity comprised between 2 and 12 cP.

By way of example, in commonly known applications, this technology is used with inks of viscosity of 2.5 cP, with an average pressure comprised between 0.02 and 0.05 bar.

In order to optimally deliver the ink 5 that has the characteristics required by the method according to the invention, the dimension of the nozzles of the valve-jet print head 20 is increased with respect to the usual size in conventional heads, to a diameter comprised between 120 and 400 µm.

Preferably, the fluid 5 to be dispensed is brought to the electromechanical print head 20 with a pressure comprised between 0.1 and 0.5 bar, using a conveniently configured plumbing system, so as to make it possible to effectively deliver the fluid 5 with characteristics required by the method according to the invention.

Management of the print head 20 in terms of the ejection of droplets of ink 5, their dimension and shape, is controlled using the programmable electronic unit 30 specifically configured for this printing method.

The piezoelectric print head, and more precisely the piezoelectric print head for additive manufacturing (AM), is a print head in which the fluid 5 is heated, preferably to a temperature exceeding 25°C and not exceeding 100°C, in order to reduce its viscosity before being dispensed by the print head 20 so as to facilitate its ejection by the nozzle.

In more detail, the fluid 5, before being dispensed, is heated so as to have a viscosity in output from the piezoelectric print head comprised between 1 and 250 cP.

Differently from the piezoelectric heads commonly used for printing (which usually have nozzles with a dimension of approximately 1 micron), the piezoelectric print head 20 optionally used in the present invention has one or more nozzles for dispensing ink droplets that have a diameter comprised between 50 and 70 µm, preferably 60 µm.

Advantageously, by virtue of the characteristics described previously, it is possible to obtain droplets of fluid 5 which have a volume comprised between 25 pL and 600 pL.

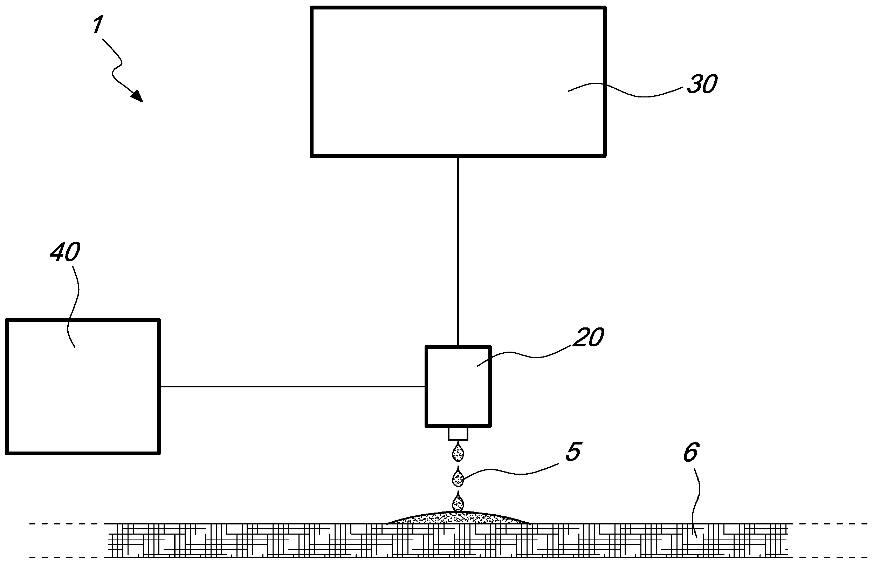

Figure 1 schematically illustrates a possible printing apparatus, generally designated with the reference numeral 1, which is adapted to carry out the method according to the invention.

This apparatus 1 comprises at least one drop-on-demand print head (DOD) 20 which is digitally controlled by a programmable electronic unit 30.

The apparatus 1 further comprises a mobilization system 40, which is adapted to move the print head 20 with respect to the fabric or hide 6 and/or the fabric or hide 6 with respect to the print head 20, and which can be provided in a known manner and can for example comprise a block that can be moved on two axes and adapted actuators.

The print head 20 comprised in the apparatus 1 can be an electromechanical valve-jet (VJ) print head with the characteristics described previously (in particular with one or more nozzles of diameter comprised between 120 and 400 µm), or a piezoelectric head with the characteristics described previously (in particular with one or more nozzles of diameter comprised between 50 and 70 µm, preferably 60 µm).

Preferably, the programmable electronic unit 30 is configured to manage the print head both in vector mode, i.e. using a digital graphics method in which the graphic elements that constitute the print to be produced are modeled as a set of geometric primitives (these elements are geometrically located in the pattern with an indication of the coordinates of the points of application), and in raster mode (i.e. a bitmap-based digital graphics method), i.e. with an on/off deposition of points of ink using a carriage that prints by performing a translational motion on an axis perpendicular to the fabric (a method generally referred to as scanning or multi-pass).

The same print head 20 can be positioned on a fixed structure on which the material performs a translational motion instead of the carriage of the print heads, and this method is generally referred to as single-pass.

The programmable electronic unit 30 also manages the hardware of the movement system 40 which is necessary for mechanical movements in order to reproduce the desired pattern in the required dimensions and graphics with even a single head, as well as for safety and emergencies.

The operation of the apparatus 1 for carrying out the method according to the invention is clear and evident from the foregoing description.

Below three possible, non-limiting embodiments of a method according to the invention are outlined.

### FIRST EMBODIMENT

This first embodiment of the method consists in providing a design using an ink with adhesive properties as the fluid 5 printed directly on metalized foil and subsequently applied on fabric with a heat press.
- Characteristics of the print head 20: electromagnetic valve-jet head, nozzle 270 microns, positive pressure 0.2 bar, open time of nozzle 850 microseconds, frequency of pulses 75 MHz.
- Fluid 5 used: polyurethane aqueous emulsion with viscosity of 180 cP at 25°C and static tension of 37 Mn/m. Glass transition temperature of - 40°C. This gives the ink adhesive properties once the water is removed and the film forms.

Subsequently a heat press is used, set to 150°C with pressure of 3.5 bar for 15 seconds.

The digital deposition of inks with adhesive properties with the characteristics indicated above makes it possible to add tactile effects to fabrics and hides without using traditional printing techniques.

As is evident from this example, by virtue of the method according to the invention it is possible to obtain digital printed designs on fabric and hides of adhesives that are very similar to what can be achieved with analog systems, thus reducing the environmental impact, costs, and times associated with traditional printing.

### SECOND EMBODIMENT

This embodiment of the method consists in providing a design made by using an ink for a Devoré effect.
- Characteristics of the print head 20: electromagnetic valve-jet head, nozzle 350 microns, positive pressure 0.1 bar, open time of nozzle 450 microseconds, frequency of pulses 16 MHz.
- Fluid 5 used: water-based ink with a viscosity of 300 cP at 25°C and static tension of 35 Mn/m with corrosive properties toward cellulose and synthetic fibers, developed in a static oven at a temperature of 170° C for 4 minutes.

Following the print, after vigorous washing the processing becomes visible and the "corrosion" of the fabric where the Devoré ink was printed is evident.

### THIRD EMBODIMENT

This embodiment of the method consists of making a conductive circuit on fabric using an ink composed of micronized graphene and carbon.
- Characteristics of the print head 20: electromagnetic valve-jet head, nozzles of 120 microns, positive pressure 0.2 bar, open time of nozzles and frequency of pulses managed by specially-constructed waveform.
- Fluid 5 used: aqueous emulsion with dispersion of micronized graphene and carbon black (for a total of 3.2%) with viscosity of 700 cP at 25°C and static tension of 42 Mn/m. This gives the ink thermal conduction and electrical properties.

Printing on a base of polyurethane spread measures an electric resistance, measured between points mutually spaced apart by 10 cm, equal to 30 kQ.

This example also shows the printing of high-viscosity inks for the functional graphic reproduction of conductive inks without the need for setting up traditional printing plants.

In practice it has been found that the printing method for the aesthetic, tactile or functional decoration of fabrics and hides according to the present invention achieves the intended aim and objects in that it is more versatile and efficient, and therefore more adapted to the provision of customized products, with respect to the known art.

Another advantage of the method according to the invention consists in that it reduces waste materials and energy consumption.

Another advantage of the method according to the invention consists in that it is easy and rapid to provide and at low cost.

The printing method for the aesthetic, tactile or functional decoration of fabrics and hides thus conceived is susceptible of numerous modifications and variations all of which are within the scope of the appended claims.

Moreover, all the details may be substituted by other, technically equivalent elements.

The disclosures in Italian Patent Application No. 102022000002504 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A printing method for the aesthetic, tactile or functional decoration of fabrics and hides, which is **characterized in that** it comprises a digital printing process in which droplets of at least one coloring and/or functionalizing fluid (5) are dispensed onto a fabric or hide (6) by a digitally-controlled drop-on-demand print head (20),
and wherein said fluid (5) has a viscosity at 25°C comprised between 100 and 3500 cP and a static tension comprised between 20 and 75 mN/m.

2. The method according to claim 1, **characterized in that** said static tension is comprised between 30 and 45 mN/m.

3. The method according to claim 1, **characterized in that** said fluid (5) has a particle size distribution smaller than 50 µm, preferably smaller than 25 µm.

4. The method according to claim 1, **characterized in that** said drop-on-demand print head (20) is an electromechanical head which comprises an electronically-controlled piston configured to modulate the flow rate of dispensed fluid (5).

5. The method according to claim 4, wherein said fluid (5) is conveyed into said print head with a pressure comprised between 0.1 and 0.5 bars.

6. The method according to one or more of claims 1 to 3, **characterized in that** said print head (20) is a piezoelectric print head, in which the fluid (5) is heated to a temperature higher than 25° and not higher than 100°, so as to reduce its viscosity before it is dispensed by said print head.

7. The method according to claim 6, wherein said fluid (5), before being dispensed, is heated so as to have a viscosity in output from the print head comprised between 1 and 250 cP.

8. The method according to one or more of the preceding claims, **characterized in that** said fluid (5) is a functionalizing ink chosen from:
- an ink with adhesive properties comprising a polyurethane aqueous emulsion;
- an ink with corrosive properties towards cellulose and synthetic fibers;
- an electrically-conducting ink comprising graphene.

9. An apparatus for providing a method according to one or more of the preceding claims, which comprises at least one drop-on-demand print head (20) which is digitally controlled by a programmable electronic unit (30), and a mobilization system (40) which is adapted to move the print head (20) with respect to the fabric or hide (6) and/or vice versa;
**characterized in that** said at least one print head (20) is an electromechanical print head that comprises:
- an electronically-controlled piston configured to modulate the flow rate of fluid (5) that is dispensed;
- one or more nozzles for dispensing droplets of fluid (5) which have a diameter comprised between 120 and 400 µm.

10. An apparatus for providing a method according to one or more of claims 1 to 8, which comprises at least one drop-on-demand print head (20) which is digitally controlled by a programmable electronic unit (30), and a mobilization system (40) which is adapted to move the print head with respect to the fabric or hide (6) and/or vice versa;
**characterized in that** said at least one print head (20) is a piezoelectric print head that comprises at least one nozzle for dispensing droplets of fluid (5) which has a diameter comprised between 50 and 70 µm, preferably 60 µm.
